# EUROPEAN PATENT APPLICATION

(11) **EP 1 270 612 A1**
(43) Date of publication of application: **02.01.2003**
(21) Application number: 02013484.7
(22) Date of filing: 17.06.2002
(51) Int. Cl.: C08F 36/00, C08F 4/54

(54) **Process for the preparation of diene polymers**

(30) Priority: 29.06.2001 CA 2351957
(71) Applicant: Bayer Inc., Sarnia, ON N7T 7M2 (CA)
(72) Inventor: Barsan, Florin, Sarnia, Ontario, Canada N7T 7S9 (CA); Osman, Akhtar, Sarnia, Ontario, Canada N7T 5X7 (CA)
(74) Representative: Bailly, Peter

(57) **Abstract**

Disclosed herein is a process for preparing a diene polymer having a *trans* content of in the range of from 10 to 30% by the polymerization of a diene monomer in the presence of a two-component catalyst system comprising a rare-earth metal catalyst and a Lewis acid co-catalyst.

## Description

### FIELD OF THE INVENTION

The present invention relates to a process for the preparation of diene polymers.

### BACKGROUND OF THE INVENTION

Polybutadiene, a homopolymer of 1,3-butadiene, can be manufactured by both solution and emulsion methods. The polymer has excellent abrasion resistance, high resilience and excellent low-temperature flexibility. The polymer exists in isomeric forms, since the 1,3-butadiene monomer can be incorporated into the growing polymer chain in three ways, namely *cis* 1,4; *trans* 1,4 or vinyl 1,2. The microstructure (*i.e.* the *cis*, *trans* and vinyl content) of the polymer has profound effects on the properties thereof.

The largest application for polybutadiene polymers is in tire technology. Tire components which contain the polymer include chafers, sidewalls, carcasses and treads. Medium- and high-vinyl polybutadienes are used in tire tread applications; whereas medium- and high-cis polybutadienes are used in the manufacture of high impact polystyrene (HIPS). Other polybutadiene applications include golf ball cores, shoe soles, automotive power transmission belts, industrial belts and conveyor belts.

The majority of commercially available elastomeric polybutadienes are produced in solution by either Ziegler-Natta type co-ordination polymerization or anionic polymerization using alkyl lithium catalysts. High-cis polybutadiene is produced by a range of Ziegler-Natta polymerization catalysts. Recently, such polybutadienes have been made available by Neodymium-catalyzed polymerization, which produces a high-*cis* polybutadiene having improved properties such as green strength, fatigue resistance and processability. High-trans polybutadiene can be prepared by the addition of nucleophilic ligands to transition-metal based Ziegler-Natta catalysts.

Polybutadienes having a *trans*-content intermediate in range between the high-cis and high-*trans* polymers, for example in the range of from 10 to 30%, have been prepared to date only by the isomerisation of high-cis polybutadienes. This method has the obvious disadvantage that it is a two-step process (step one being the preparation of the high-cis polymer), which has both time and cost implications. Further, the use of isomerisation catalysts and/or initiators may result in a polymer having relatively high levels of impurities or contaminants; such impurities or contaminants (or residues arising therefrom) can have deleterious effects on the properties of the polymer itself, or may interfere with subsequent processing of the polymer (e.g. vulcanization, compounding). Unlike high-*trans* polybutadiene (which is, in fact, plastic in nature) this polymer still has good elastomeric properties.

### SUMMARY OF THE INVENTION

We have found a means for preparing a diene polymer having a *trans* content in the range of from 10 to 30% directly, without having to isomerise a high-*cis* polymer. Such a direct (i.e. one-step) method means that the polymer can be produced more cheaply, and more efficiently, than by the method of the art. Further, since no isomerisation catalysts or initiators are used the polymer contains fewer impurities or contaminants, and there is no concern with the effects such compounds (or residues arising therefrom) might have on the properties of the polymer, or subsequent treatment thereof. Unexpectedly, polymerization of butadiene using a two-component catalyst system comprising a rare-earth metal catalyst and a Lewis acid co-catalyst, wherein neither of these components is halogenated, gives a polymer having a *trans* content in the range of from 10 to 30% in good yield.

### DETAILED DESCRIPTION OF THE INVENTION

The process disclosed herein comprises the polymerization of a diene in the presence of a two-component catalyst system which comprises a rare-earth metal catalyst and a Lewis acid co-catalyst, wherein neither of these components is halogenated, and with the proviso that the co-catalyst is not a trialkyl aluminum.

The rare-earth metal catalyst has the general formula :

**ML**_{**3**}

wherein M is a rare-earth metal chosen from those of Group IIIB of the Periodic Table, and includes metals such as Ce, La, Pd, Gd and Nd. Preferably, M is Nd.

Each L, which may be the same or different, is an anionic counter-ion or a ligand derived from an organic compound which is soluble in hydrocarbon solvent. Preferably, L is a carboxylate, alcoholate, acetonate or phosphate. Preferred catalysts include, but are not limited to, Neodymium propanolate, praesodymium butanolate, lanthanum propionate, neodymium diethylacetate, neodymium acetylacetonate and the like. Most preferred catalysts are Neodymium versatate and Neodymium naphthanoate.

The co-catalyst is a non-halogenated Lewis acid, with the proviso that it is not a trialkyl aluminum. Preferably, it is an aluminoxane, or a mixture of two or more aluminoxanes. The aluminoxane co-catalyst (which may, in fact, be prepared *in situ)* typically is an oligomeric aluminum compound represented by the general formula (R-Al-O)ₙ, which is a cyclic compound, or R(R-Al-O)ₙAlR₂, which is a linear compound. In the general aluminoxane formula, R is independently a C₁ to C₁₀ hydrocarbyl radical (for example, methyl, ethyl, propyl, butyl or pentyl) and n is an integer in the range of from 1 to 100. R may also be, independently, other non-hydrocarbyl monovalent ligands such as amide, alkoxide and the like.

More preferably, the co-catalyst is an alkylaluminoxane. Most preferably, it is methylaluminoxane, modified methylaluminoxane (M-MAO) or isobutyl-aluminoxane. Modified methyl-aluminoxane is available from Akzo Nobel, and has the Modified methyl-aluminoxane is available from Akzo Nobel, and has the approximate general formula -[Me_{0.7}ⁱBu_{0.3}AlO]ₓ- (so-called Type 3A) or -[Me_{0.9}ⁱBu_{0.1}AlO]ₓ- (Type 4).

Aluminoxanes can be prepared by various procedures known in the art. For example, an aluminum alkyl may be treated with water dissolved in an inert organic solvent, or it may be contacted with a hydrated salt, such as hydrated copper sulphate suspended in an inert organic solvent, to yield an aluminoxane. Generally, however prepared, the reaction of an aluminum alkyl with a limited amount of water yields a mixture of the linear and cyclic species, and also there is a possibility of interchain complexation (crosslinking). The catalytic efficiency of aluminoxanes is dependent not only on a given preparative procedure but also on a deterioration in the catalytic activity ("ageing") upon storage, unless appropriately stabilised.

The polymerization may be carried out in an inert solvent, preferably in a hydrocarbon solvent. Such solvents are known to those skilled in the art, and include hexane, cyclohexane, pentane and toluene. Preferred solvents are hexane and cyclohexane. The most preferred solvent is hexane. The amount of solvent used may vary within wide limits, although environmental and economic factors suggest that the amount should be kept as small as possible.

Monomers which may be employed in the polymerization reaction include, but are not limited to, conjugated dienes such as 1,3-butadiene, isoprene, 2,4-hexadiene, piperylene and 1,3-pentadiene. So-called "C4-raffinate", a by-product of petroleum cracking, is a mixture of 1,3-butadiene and isomeric butanes and butenes, and can serve as both feedstock and solvent for the polymerization reaction.

The polymerization may be carried out at a temperature in the range of from 20 °C to 200 °C. Preferably, the temperature is in the range of from 50 °C to 100 °C. Most preferably, the temperature is in the range of from 50 °C to 75 °C.

The amount of rare-earth metal catalyst employed in the polymerization reaction is in the range of 0.01 to 10 phm (parts per hundred parts monomer), preferably in the range of 0.02 to 1 phm and most preferably in the range of 0.05 to 0.25 phm.

The amount of co-catalyst employed in the polymerization reaction is in the range of from 0.01 to 10 phm, preferably in the range of from 0.025 to 5 phm and most preferably in the range of from 0.05 to 5 phm.

The resulting polymers have a *cis* double-bond content in the range of from 70 to 90% (70 - 90% per 100 % of all double bonds); a *trans* double-bond content in the range of from 10 to 30%; and a vinyl content of less than 5%.

A typical polymer has the following properties
- A Mooney viscosity [ML(1+4', 100°C)] in the range of from 30 to 120 Mooney Units (MU).
- A molecular weight in the range of from 100,000 to 500,000 g/mol
- A unimodal molecular weight distribution with a polydispersity index of 2.75.

### EXAMPLES

### Experimental.

### Raw Materials

Technical hexane was passed through 3A and 13X molecular sieves and stored under argon. 1,3-butadiene was obtained from the Olefins unit of Bayer, Inc. in Sarnia, passed through 3A molecular sieves and stored under argon at -20°C.

M-MAO (7.1% solution in toluene) was obtained from Akzo-Nobel. Neodymium versatate (NdV) was obtained from Rhodia (18.3% solution in hexane).

### Procedure

Experiments were carried out using standard laboratory methodology familiar to those of skill in the art. A fixed amount of dry solvent was dispensed into a dried glass polymerization bottle, followed by the desired amount of dried monomer at low pressure and ambient temperatures. Solutions of catalyst and co-catalyst were added *via* syringe and the bottles shaken for a specified time, after which they were placed in a polymerizer bath set to the desired temperature. After agitation for the required length of time the reaction was shortstopped with alcohol and antioxidant and the polymer recovered by coagulation.

Details of experiments carried out and the results thereof are shown in the following table:

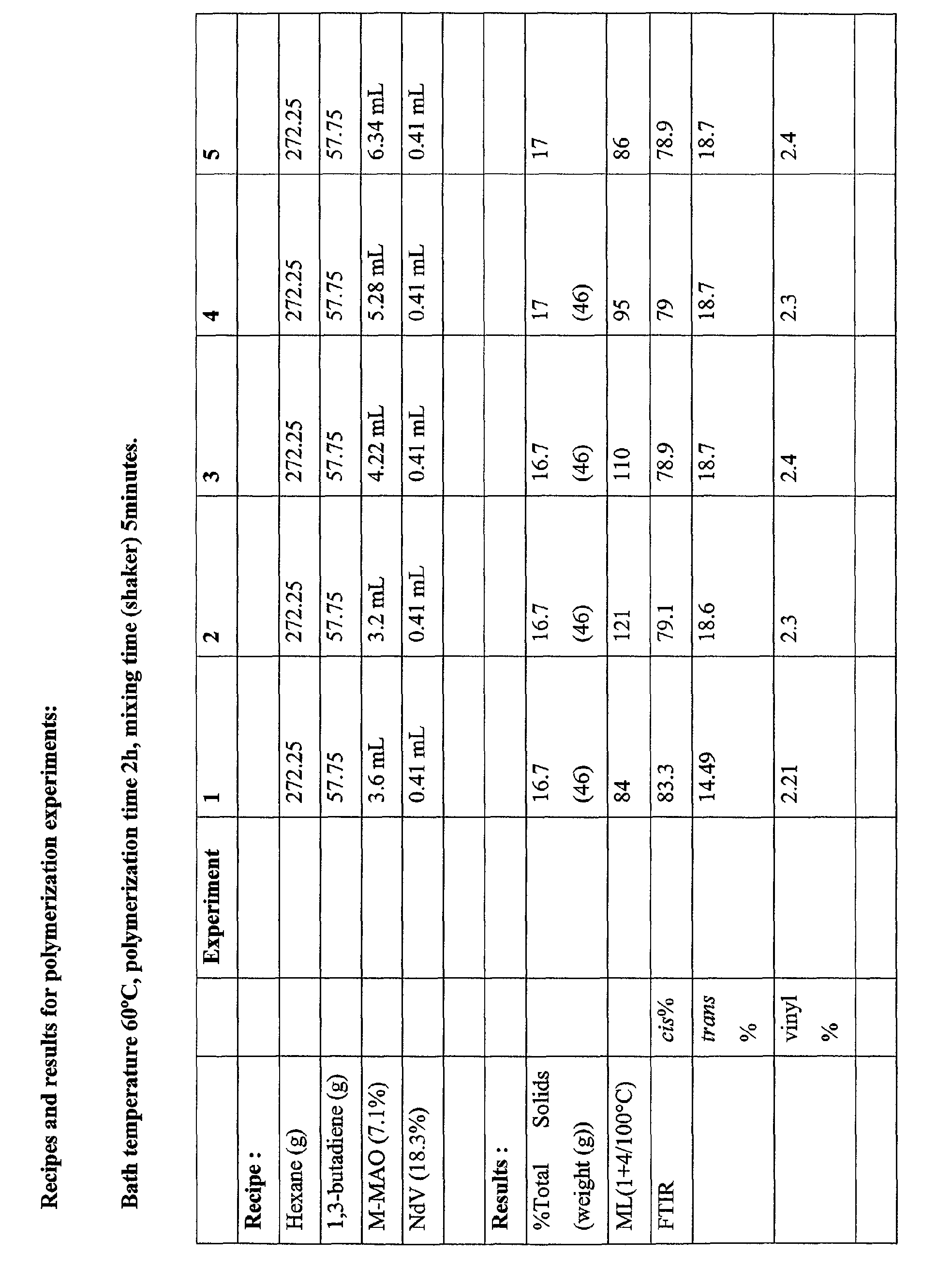

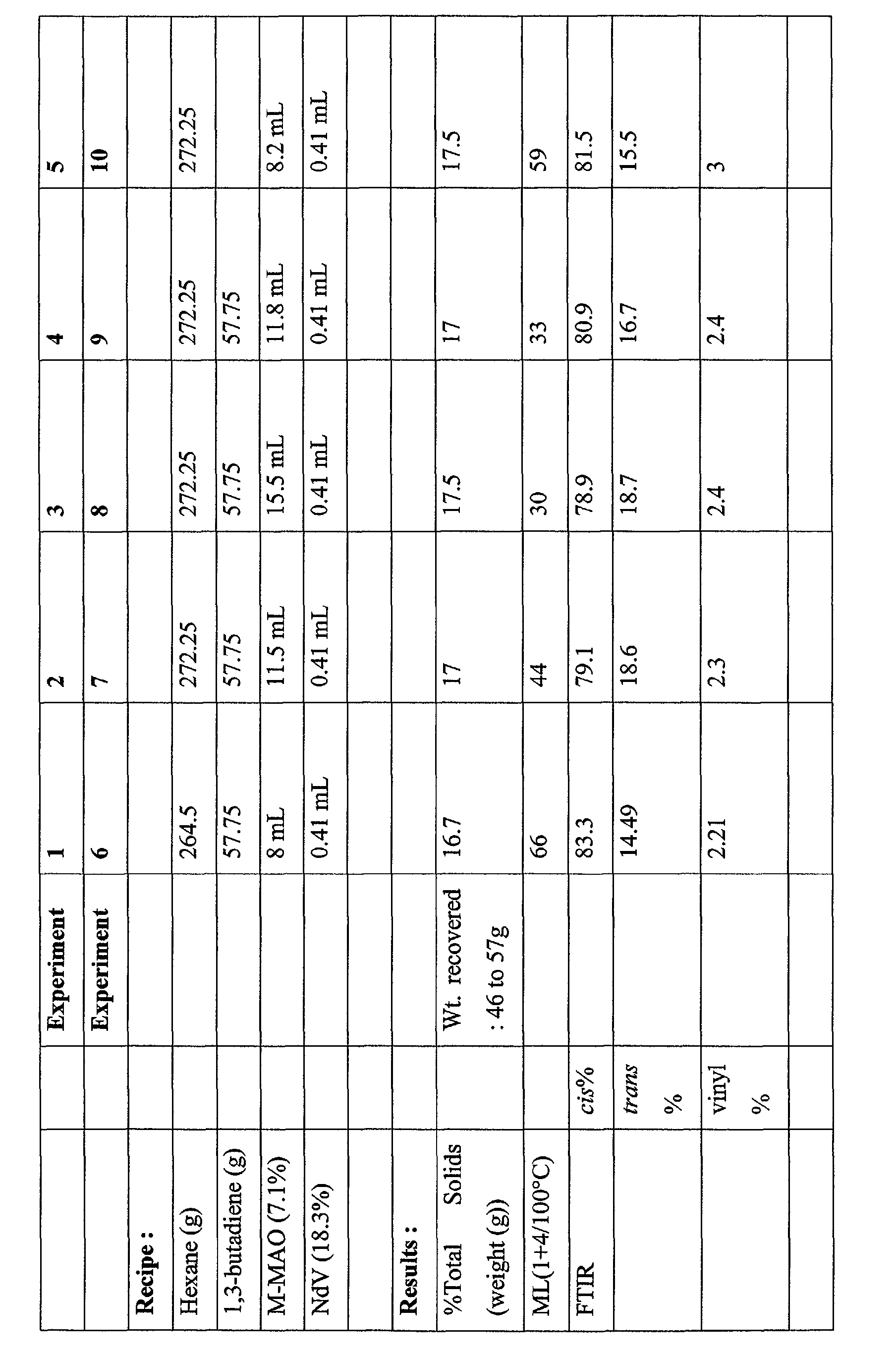

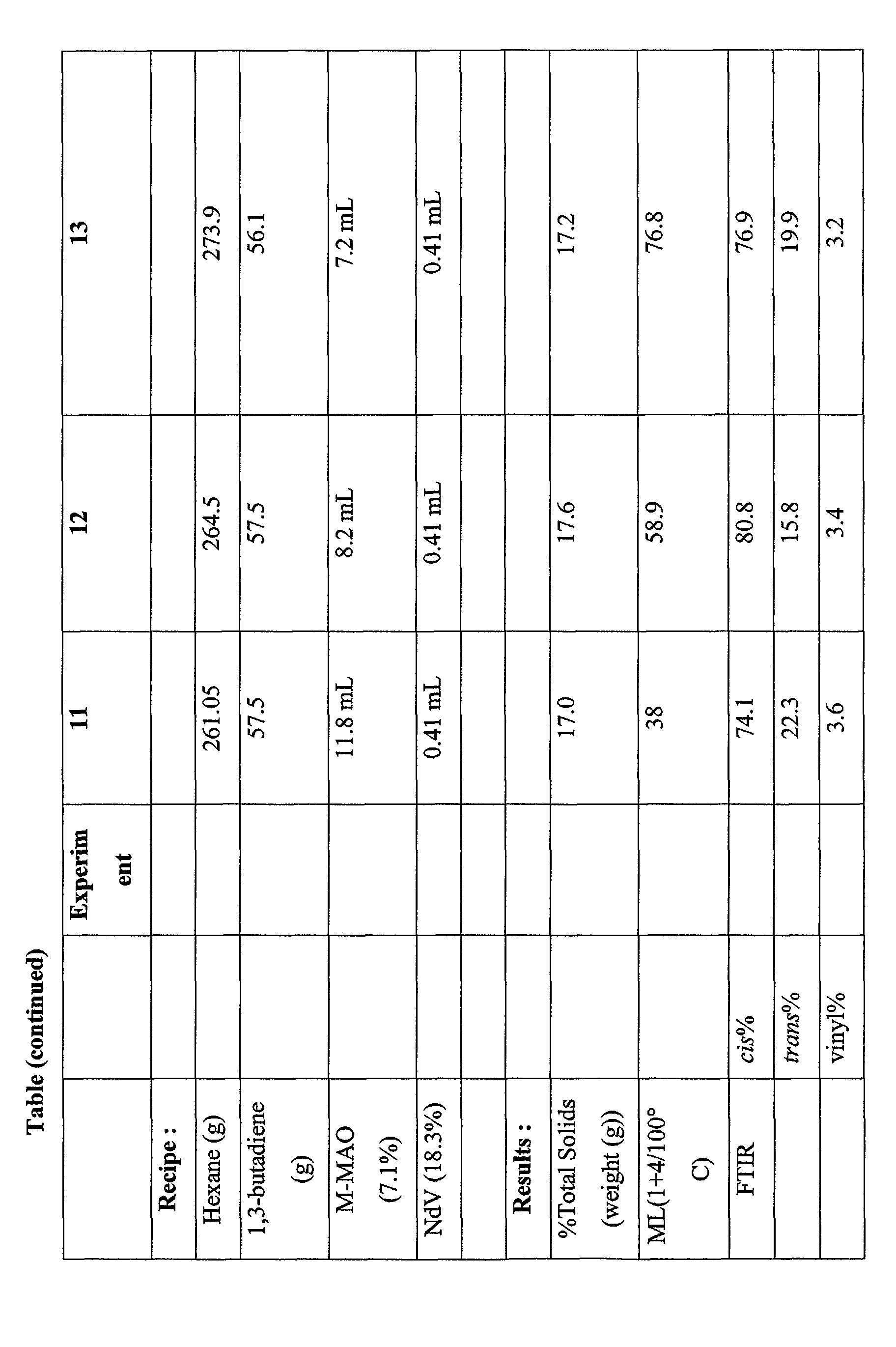

## Claims

1. A process for preparing a diene polymer having a *trans* content in the range of from 10 to 30% which comprises the step of polymerizing a diene monomer in the presence of a two-component catalyst system comprising
(a) a rare-earth metal catalyst of formula :
ML₃
wherein M is a rare-earth metal chosen from those of Group IIIB of the Periodic Table, and each L, which may be the same or different, is an anionic counter-ion or a ligand derived from an organic compound which is soluble in hydrocarbon solvent; and
(b) a co-catalyst which is a Lewis acid,
wherein neither the catalyst nor the co-catalyst are halogenated, and with the proviso that the co-catalyst is not a trialkyl aluminum.

2. A process according to claim 1 wherein L is selected from the group consisting of a carboxylate, an alcoholate, an acetonate and a phosphate.

3. A process according to claim 2 wherein L is selected from the group consisting of propanolate, propionate, acetylacetonate, versatate and naphthanoate.

4. A process according to any one of claims 1-3 wherein M is Nd.

5. A process according to any one of claims 1-4 wherein the co-catalyst is an aluminoxane.

6. A process according to claim 5 wherein the aluminoxane is an alkyl aluminoxane.

7. A process according to claim 6 wherein the aluminoxane is selected from the group consisting of methylaluminoxane, modified methylaluminoxane and isobutylaluminoxane.

8. A process according to any one of claims 1-7 wherein the amount of rare-earth metal catalyst used is in the range of from 0.01 to 10 parts per hundred parts monomer.

9. A process according to any one of claims 1-8 wherein the amount of co-catalyst used is in the range of from 0.025 to 5 parts per hundred parts monomer.

10. A process according to any one of claims 1-9 wherein the diene monomer is selected from the group consisting of 1,3-butadiene, isoprene and 2,4-hexadiene.

11. A two-component catalyst system for the preparation of a diene polymer having a *trans* content in the range of from 10 to 30% comprising
(a) a rare-earth metal catalyst of formula :
ML₃
wherein M is a rare-earth metal chosen from those of Group IIIB of the Periodic Table, and each L, which may be the same or different, is an anionic counter-ion or a ligand derived from an organic compound which is soluble in hydrocarbon solvent ; and
(b) a co-catalyst which is a Lewis acid,
wherein neither the catalyst nor the co-catalyst are halogenated, and with the proviso that the co-catalyst is not a trialkyl aluminum.
